# EUROPÄISCHE PATENTANMELDUNG

(11) **EP 4 559 887 A1**
(43) Veröffentlichungstag der Anmeldung: **28.05.2025**
(21) Anmeldenummer: 24194314.1
(22) Anmeldetag: 13.08.2024
(51) Int. Cl.: C04B 41/00, C04B 41/49, C04B 41/64, C03C 17/30, C09D 183/04, H10F 77/30, C04B 111/72

(54) **BASISSCHUTZMITTEL**

(30) Priorität: 14.08.2023 DE 102023121705
(71) Anmelder: KSK Forschung und Entwicklungs GmbH, 04720 Döbeln (DE)
(72) Erfinder: RISCHER, Uwe, 01277 Dresden (DE)
(74) Vertreter: Liedtke & Partner Patentanwälte

(57) **Zusammenfassung**

Die Erfindung betrifft ein Basisschutzmittel, umfassend eine Mischung folgender Komponenten:
- mindestens ein Silikat,
- mindestens ein kurzkettiges Silan,
- mindestens ein langkettiges Silan,
- Ethanol und/oder Isobutanol als Konservierungsstoff.

Die Erfindung betrifft ferner ein Herstellungsverfahren sowie die Verwendung des Basisschutzmittels.

## Beschreibung

Die Erfindung betrifft ein Basisschutzmittel, welches insbesondere zum dauerhaften Schutz von Natursteinen und Kunststeinen geeignet ist. Die Erfindung betrifft ferner ein Verfahren zur Herstellung des Basisschutzmittels sowie eine Verwendung des Basisschutzmittels.

Schutzstoffe für Steine, insbesondere Kunststeine, sind im Stand der Technik bekannt. Beton ist ein Baustoff, der als Dispersion unter Zugabe von Flüssigkeit aus einem Bindemittel und Zuschlagstoffen angemischt wird. Der ausgehärtete Beton (wie auch z. B. Terrazzo oder Spachtelmasse) wird in manchen Zusammenhängen auch als Kunststein bezeichnet.

In Betonwerken, welche Kunststeine für Böden (z. B. klein- und großformatige Pflastersteine) oder Wände (z. B. Sichtbeton) herstellen, werden Beschichtungs- bzw. Betonschutzmittel im Produktionsprozess in die Steinmischung eingearbeitet oder aufgesprüht.

Nach dem Herstellungsprozess werden die Steine, z. B. Pflaster, sofort palettiert und sind somit äußerlichem Schwitzwasser und wässrigen Austreibungen, z. B. Kalkausblühungen, aus dem Steininneren ausgesetzt. Bekannt ist, dass Betonwaren etwa 28 Tage zur fertigen Reaktion benötigen und hierbei das Reaktionswasser aus dem Stein getrieben bzw. umgesetzt wird. Da die Palettierung jedoch in der Regel bereits nach zwei bis fünf Minuten nach der Sprühanlage mit dem Beschichtungsmittel erfolgt, ist der Reaktionsprozess noch nicht abgeschlossen und der Stein muss somit innerhalb der Palette weiter reagieren. Hierbei scheitern bisherige alkoholbasierte Betonschutzmittel an der zu hohen Restfeuchte.

Im Bereich der Schutzmittel für mineralische Spachtelmassen ist bekannt, Öle, Wachse und Polymere einzusetzen, welche jedoch erhebliche Nachteile in der Schutzwirkung und bei der Verarbeitung aufweisen, insbesondere, da es sich nicht um Schutzstoffe mit einer ähnlichen chemischen Stoffzusammensetzung wie die verarbeitete Spachtelmasse handelt, und diese somit keine feste Verbindung mit dieser Spachtelmasse eingehen können, sondern immer eine extra nur auf der Oberfläche aufliegende Schicht erzeugen. Optisch erscheint diese Schicht als Fremdkörper und stört das eigentlich gewünschte natürliche Aussehen. Ferner funktioniert die Schutzwirkung dieser Schutzmittel oft nur mit starken Einschränkungen. Insbesondere werden meist Säure- oder Alkaliangriffe auf die Spachtelmasse nicht verhindert oder die Flächen sind anfälliger für Umweltverschmutzungen und mechanische Belastungen, so dass Reinigungsvorgänge in kürzeren Abständen mit hohem Einsatz an Reinigungschemie erforderlich sind. Da Spachtelmassen stofflich bedingt eine hohe Absorptionseigenschaft von Farbpartikeln aufweisen, ist die Reinigung zur Entfernung von Flecken meist wenig erfolgreich.

Aus WO 2006/010663 A2 ist bekannt, dass Natursteine mittels Silangemischen vor Wasser geschützt werden können.

Der Erfindung liegt die Aufgabe zu Grunde, ein neuartiges Basisschutzmittel, ein neuartiges Verfahren zur Herstellung des Basisschutzmittels sowie eine neuartige Verwendung des Basisschutzmittels anzugeben.

Die Aufgabe wird erfindungsgemäß gelöst durch ein Verfahren mit den Merkmalen des Anspruchs 1, durch ein Basisschutzmittel mit den Merkmalen des Anspruchs 4 und durch eine Verwendung mit den Merkmalen eines der Ansprüche 7, 10 und 11.

Vorteilhafte Ausgestaltungen der Erfindung sind Gegenstand der Unteransprüche.

In der vorliegenden Anmeldung sind Prozentangaben als Gewichtsprozent zu verstehen, sofern nicht ausdrücklich etwas anderes angegeben ist.

Ein erfindungsgemäßes Basisschutzmittel umfasst eine Mischung folgender Komponenten:
- mindestens ein Silikat,
- mindestens ein Alkylalkoxysilan mit maximal drei OH-Bindungen,
- mindestens ein Alkylalkoxysilan mit vier bis acht OH-Bindungen,
- Ethanol und/oder Butan-2-ol als Konservierungsstoff.

Das Basisschutzmittel ist als hochwirksamer Schutz von Betonfertigteilen geeignet und lässt beispielsweise die Restfeuchte von palettierten Betonsteinen gasförmig aus dem Betonstein heraus, ohne das CO₂ der Luft zur Verfestigung des Betonsteines zu behindern, lässt dieses aber bei der Carbonatisierung im Steininneren nicht an die Oberfläche, so dass Ausblühungen verhindert werden.

In einer Ausführungsform umfasst das Basisschutzmittel ferner bis zu 7,5% Gewichtsanteil oligomere Kieselsäure.

In einer Ausführungsform umfasst das Basisschutzmittel eine Mischung folgender Komponenten:
- 8 % bis 12 % Kieselsäureester (opaleszierende, wässrige kolloidale Nanopartikel-Dispersion aus amorphen Siliziumdioxid (Kieselsol),
- 15 % bis 25% Wasser,
- 8 % bis 43 %, beispielsweise 30 %, Alkohol Ethanol,
- 0,01 % bis 1,5% ungesättigte Fettsäure, beispielsweise Linolsäure, oder Phosphorsäure oder Tetramethylammoniumhydroxid
- 0,01 % bis 1,5% Kaliumsilikat als Silikat,
- 10 % bis 30% Alkylalkoxysilan mit maximal drei OH-Bindungen,
- 5 % bis 15% Alkylalkoxysilan mit vier bis acht OH-Bindungen,
- 0 bis 8% Isobutanol oder Alkohol Butan-2-ol, und
- 0 bis 5% Kieselsäuredispersionskolloid.

In einer Ausführungsform ist als Kieselsäureester Tetraethylorthosilicat vorgesehen.

Ferner können Farbpigmente, insbesondere rein mineralische Farbpigmente im Basisschutzmittel enthalten sein, beispielsweise 10% bis 20% Gewichtsanteile.

Gemäß einem Aspekt der vorliegenden Erfindung wird ein Schutzmittel vorgeschlagen, umfassend das oben beschriebene Basisschutzmittel, dem ein Bindemittel, insbesondere eine hydrophile pyrogene Kieselsäure oder eine kolloidale Kieselsäure beigemischt ist. Das Bindemittel kann beispielsweise als pulverförmiges und Nanopartikel enthaltendes Siliziumdioxid ausgebildet sein.

In einer Ausführungsform umfasst das Schutzmittel eine Mischung von 25% bis 35% des Basisschutzmittels wie oben beschrieben mit folgenden Komponenten:
- 30 % bis 50 % wasserlösliche Polymetacrylatfarbe mit Polyurethananteil,
- 5% bis 15% Kieselsol als Dispersionskolloid,
- 5% bis 15% mindestens eines Alkohols, beispielsweise Ethanol.

Das Basisschutzmittel oder das Schutzmittel kann hergestellt werden, indem die Komponenten bei Umgebungstemperatur, insbesondere bei einer Temperatur von 15° C bis 35 °C miteinander vermischt werden.

Die Herstellung kann beispielsweise bei Umgebungsdruck, insbesondere bei einem Druck von 0,5 bar bis 2,5 bar, erfolgen.

Die Herstellungstemperatur kann so gesteuert werden, dass die Materialmischung im Prozess mindestens 45 °C und maximal 59 °C erreicht.

In einer Ausführungsform kann die Herstellung dreistufig oder vierstufig erfolgen, insbesondere einschließlich Hydrolyse und/oder Polykondensation.

Das Basisschutzmittel kann vorzugsweise zur Behandlung von Kunststein oder Naturstein verwendet werden.

Die vorliegende Erfindung beschreibt ein chemisches Basisschutzmittel, welches so konzipiert ist, dass Wasser, egal ob Schwitzwasser, Spritzwasser oder ausgetriebenes kalkhaltiges Wasser, kurz nach der werkseitigen Beschichtung eines Werksteins nur noch einmalig und sofort mit dem Werkstein reagiert. Späteres Benetzen mit Wasser führt nicht mehr zu einer Reaktion mit dem Basisschutzmittel.

Mit dem Basisschutzmittel ist es möglich, dass frisch hergestellte Betonsteine mit einer wirksamen alkoholbasierten Beschichtung versehen werden können. Dabei ist es vorteilhaft, das Basisschutzmittel auf den Beton aufzusprühen. Bei diesem Verfahren kann das Basisschutzmittel maschinell, beispielsweise durch eine Sprühbrücke, in den Produktionsprozess des Betonsteins integriert werden. Dadurch kann die Sprühmenge sofort auf unterschiedliche Betonsteine eingestellt werden, da die Betonwerke meist mehrere unterschiedliche Steine mit unterschiedlichen Oberflächentopografien produzieren.

Es ist möglich, insbesondere bei ungünstigen Werksbedingungen, das Basisschutzmittel nach dem Sprühvorgang nachzurollen, mit einem Gebläse zu trocknen und/oder mittels einer Infrarot-Brücke zu erwärmen.

Sollte dem Betonstein zu viel Wasser zugeführt werden, beispielsweise als Restfeuchte im Beton, Tropfen von der Werksdecke oder Niederschlag nach Palettierung oder Schwitzwasser, so nimmt das Basisschutzmittel, insbesondere dessen langkettige Silane, dieses Wasser auf, ohne die Schutzoberfläche optisch und technisch zu verändern.

Nach der Herstellung des erfindungsgemäßen Basisschutzmittels kann dieses für farbige Anwendungen einer nochmaligen Behandlung unterzogen werden, um Farbpartikel einzubauen. Hierbei werden im letzten Schritt der Hydrolyse, im letzten Drittel des Herstellungsprozesses, mittels Einstreuen insbesondere rein mineralische Farbpigmente zugeführt. Die Dichte und Menge der Farbpigmente hängt von dem gewünschten Einsatzbereich und Farbton ab. Eine Zuführung von Farbpigmenten mit einem Gewichtsanteil von 15 % bis 35 % ist besonders vorteilhaft. Chemisch beginnt dabei eine Reaktion um die Farbpigment-Partikel herum, diese werden sozusagen vom Basisschutzmittel eingeschlossen.

In einer Ausführungsform kann das Basisschutzmittel zur Sanierung eines Risses in Kunststein oder Naturstein verwendet werden, wobei 25% bis 35% des Basisschutzmittels vor der Verarbeitung mit folgenden Komponenten gemischt werden:
- 30 % bis 50 % wasserlösliche Polymetacrylatfarbe mit Polyurethananteil, farblich angepasst an den Bestandsuntergrund des Natur- oder Kunststeins,
- 5% bis 15% Kieselsol als Dispersionskolloid,
- 5% bis 15% Alkohol, beispielsweise Ethanol,
wobei die Mischung mindestens einmal oder mindestens zweimal in den Riss eingebracht wird.

Vor dem Einbringen der Mischung kann Kieselsäureester als Vorbehandlungsstoff auf die Flanken des Risses aufgebracht und eine Reaktionszeit von vier bis acht Stunden ermöglicht werden.

Für mineralische Spachtelmassen kann das Basisschutzmittel eine Sperrschicht erzeugen. Dabei wurde überraschend festgestellt, dass die meist sehr hohe Alkalität der Spachtelmasse eine extrem gute Anbindung des Basisschutzmittels erreicht, insbesondere wenn dieses leicht sauer eingestellt ist, so dass es bei der Applikation zu einer extrem wirkungsvollen Reaktion mit der Spachtelmasse, insbesondere Bodenspachtel, kommt. Dabei entsteht eine Wechselwirkung, insbesondere eine Alkali-Säure-Reaktion, bei der das Basisschutzmittel eine sehr starke Verbindung mit der Spachtelmasse eingeht, durch die die damit behandelten Böden eine sehr hohe Abriebfestigkeit erhalten. Die chemische Widerstandsfähigkeit wird durch diese Wechselwirkungsreaktion so weit erhöht, dass selbst ein Ablösen mittels Ethanol oder Butanol fast nicht mehr möglich ist. Bei der Reaktion von Designspachtel mit dem Basisschutzmittel erfolgt ebenfalls die vorher beschriebene Reaktion. Die Spachtelmassen haben nach Applikation und circa siebentägiger Anfangsreaktion eine höhere Härte um 1 bis 2 Grad Mohs. Spachtelmassen sind in der Regel hydrophil, um Kleber o. Ä. besser aufzunehmen. Diese Eigenschaft ändert sich in eine hydrophobe und ölabweisende Eigenschaft mit sehr hoher Säureresistenz. Die Alkali-Säure-Reaktion ist bei der Verarbeitung sehr heftig.

Da das Basisschutzmittel eine sehr schnelle Anfangsreaktion aufweist und ein Verarbeiter dies dann nicht streifenfrei aufbringen kann, besteht für die bessere Verarbeitbarkeit die Möglichkeit, das Basischutzmittel 1: 1 mit Ethanol zu verdünnen.

Für die Anwendung als Spachtelmasse kann das Basisschutzmittel mit Ethanol verdünnt sein, beispielsweise 1: 1, und zweifach aufgetragen werden. Zusätzlich kann ein Bindemittel, z.b. spezielles Kieselsol als Verzögerer, zur Vermeidung von Rollspuren im Produktionsprozess eingemischt werden. Das Bindemittel bzw. der Verzögerer wird durch die hohe Alkalität der Spachtelmasse nach Applikation zerstört. Dies wirkt sich nicht auf die Schutzwirkung des Basisschutzmittels aus.

Das Basisschutzmittel kann beispielsweise zum Einsatz kommen, um Kunststeine, beispielsweise Betonsteine und mineralische Spachtelmassen besonders zu schützen.

Der Erfinder der vorliegenden Erfindung hat festgestellt, dass alkoholbasierte und anorganische Beschichtungsmittel für Betonsteine einen erheblich besseren und längerfristigen Schutz dieser Betonsteine ermöglichen. Aus dem Stand der Technik bekannte wasserbasierte Beschichtungsmittel beinhalten in der Regel Polymere zur Stabilisierung, als Bindemittel und vor allem zum Verschmutzungsschutz in Innenbereichen. Wasserbasierte Schutzmittel für den Außenbereich beinhalten Polymerverbindungen zur UV-Stabilität. Diese Verbindungen weisen allerdings eine begrenzte Haltbarkeit auf. Alle polymerhaltigen Schutzchemikalien haben, chemisch begründet, eine nur sehr begrenzte Schutzwirkung gegenüber Säuren und hochalkalischen Angriffen, sowie gegen UV-Strahlung. Eine solche Schutzwirkung wird jedoch durch das erfindungsgemäße Basisschutzmittel erzielt. Dies betrifft vor allem im Betonbau Sichtbetonflächen, großformatiges Pflaster sowie Betonelemente für Einfahrten und Gartengestaltung, beispielsweise Grillplätze.

Das erfindungsgemäße Basisschutzmittel erlaubt ein sofortiges Übereinanderstapeln und Verpacken der Betonsteine für den Abtransport oder die Lagerung im Großhandel, ohne optische Schäden durch nachträgliche Wasserreaktionen, trotz extrem hoher Schutzwirkung gegen Alkali- und Säureangriffe. Nach Ablauf der Reaktionszeit werden die Gesteinsporen soweit in der Größe reduziert, das Flüssigkeiten auf den gebildeten Kristallspitzen, durch den extrem verringerten Kontaktwinkel, stehen. Die Molekülverbindungen sind zu groß, um in die verkleinerten Porengänge eindringen zu können. Da es sich jedoch um amorphe Strukturen handelt, bleibt für Gasmoleküle genügend Raum, um heraus zu diffundieren. Da dieser Gasaustausch bestehen bleibt, kann der osmotische Druck nach außen abgebaut werden, ohne die Gesteinsoberfläche zu schädigen. Zu den verminderten Flüssigkeitseintragungen zählen auch Farbangriffe mittels Sprühdosen. Diese Farbpartikel sind in der Regel zu groß, um in die, durch das ausreagierte Basisschutzmittel, verkleinerten Porengänge zu gelangen. Somit können Farbangriffe gezielt durch geringeren Reinigungsaufwand entfernt werden.

Beispielsweise kann eine Sprühanlage zum Besprühen von mit Betonteilen bestückten Betonplattenwagen mit dem Basisschutzmittel im pulsierenden Verfahren verwendet werden, beispielsweise bei einem Druck von maximal 5 bar. Eine Sprühkopfdüse kann dabei beispielsweise einen Durchmesser von 0,7 mm bis 1 mm aufweisen. Insbesondere kann ohne Verwirbelung gesprüht werden.

Nach dem Sprühvorgang kann der Betonplattenwagen während eines Zeitraums von beispielsweise 1 Minute bis 5 Minuten zu einer Palettierung fahren, beispielsweise über einen Paternoster, wobei mittels einer Belüftungsanlage eine Grundtrocknung erfolgen kann.

Bei mineralischen Spachtelmassen besteht eine besondere Herausforderung. Bei diesen Massen handelt es sich meist um eine Kombination aus zementbasierten Anteilen, welche mit den unterschiedlichsten Polymeren verbunden sind, um die jeweilige Anwendung zu erreichen. Bei Designspachtelmassen soll ein homogenes optisches Bild erreicht werden, jedoch mit einer sehr hohen Beständigkeit gegen alle haushaltsüblichen Verschmutzungen. Ebenfalls wird hier ein UV-Schutz verlangt, da diese Spachtelmassen häufig in Wohnräumen mit Südlage und bodentiefen Fenstern verarbeitet werden.

Bei mineralischen Spachtelmassen für den gewerblichen Bereich handelt es sich um Massen, welche meist eine sehr hohe Saugfähigkeit aufweisen, um nachfolgende Beläge (elastische Bodenbeläge, Fliesen, etc.) und deren Klebstoffe sehr gut aufnehmen zu können. Jedoch gibt es immer mehr Anwendungen, in denen die Saugfähigkeit der Spachtelmassen unerwünscht sind. Hier kann eine Sperrschicht gewünscht sein.

Ferner kann das Basisschutzmittels zur Behandlung eines Bauteils aus Glas, insbesondere eines Solarmoduls, verwendet werden.

Dabei kann dem Basisschutzmittel ferner kolloidales Siliziumdioxid beigemischt sein oder werden.

Für die Behandlung von Glas kann das Basisschutzmittel insoweit abgewandelt werden, dass zusätzlich zur Verbindung an der Glasfläche ein spezielles Bindemittel, beispielsweise eine hydrophile pyrogene Kieselsäure, eingesetzt wird. Dieses Bindemittel wird im ersten Herstellungsverfahrensschritt mit einem Silikat verbunden. Im zweiten Schritt der Produktherstellung wird dieses Gemisch mit kurz- und langkettigen Silanen verbunden. Dieses Stoffgemisch ist hochreaktiv und wird in Alkoholen konserviert. Nach Freisetzung auf den zu schützenden Flächen verdunstet der Alkohol sehr schnell und das Gemisch reagiert, im Idealfall unter Temperaturen von +20 Grad bis + 35 Grad C, sofort mit dem zu schützenden Glas und bildet eine chemisch nicht mehr zu lösende Nanokristalloberfläche.

Da es sich bei dem Basisschutzmittel um ein rein mineralisches und quarzhaltiges Stoffgemisch handelt, schützt dieses auch Glasscheiben vor grober mechanischer Beanspruchung. Bei schon geschädigten Gläsern an der Oberfläche können mit dem Basisschutzmittel die Fehlstellen wieder geschlossen werden.

Der Bedarf zum Schutz von Glasscheiben ohne besondere optische Ansprüche wird in Zukunft steigen. Solaranlagen und andere Glaselemente sind gerade in südlichen Gebieten erhöhten Belastungen durch Schleifwirkung ausgesetzt. Dies führt dazu, dass die prognostizierte Energieleistung nach kurzer Zeit nicht mehr erreicht wird. Ein weiteres Anwendungsfeld besteht in dem Schutz vor Flüssigkeiten jedweder Art, beispielsweise Graffiti. Hierbei wird ein einfaches umweltgerechtes Entfernen der aufgebrachten Substanzen ermöglicht, ohne Glasscheiben wechseln zu müssen.

Durch das Ausbilden einer Multikristalloberfläche entsteht bei Glas der umgangssprachlich sogenannte Lotuseffekt, da die Kristallspitzen bei flüssigen Beauflagungen nur auf den Spitzen stehen und einen extrem geringen Kontaktwinkel erzeugen. Dieses wirkt effektiv gegen die Adhäsion, somit kann ein Festhalten an der Oberfläche vermieden werden.

Beispielsweise kann das Basisschutzmittel zum Schutz von Photovoltaikmodulen im Winter zum Einsatz kommen, so dass Schnee weniger am Glas anhaften kann (auf den sich bildenden Mineralspitzen keine Anhaftung entsteht) und somit schneller durch Eigengewicht herunterrutscht. Ferner finden Öl und andere sich in den Glasfehlstellen festsetzende Chemikalien durch die infolge der Verwendung des Basisschutzmittels entstehenden Kontaktwinkel von über 150 Grad keine Haftung mehr. Eine Reinigung von Verschmutzungen kann mit erheblich weniger Reinigungsaufwand und weniger Reinigungschemieeinsatz erfolgen. Ein Auffangen von Reinigungsflüssigkeiten an Fassaden ist dabei nicht notwendig, da beim Reinigen nur mit Wasser und Druck, ohne Chemie, gearbeitet werden kann. Durch das auf Glas aufgesprühte Basisschutzmittel erhöht sich die Glasstärke nur um bis zu 0,1 mm. Dies reicht für eine in der Regel doppelte Lebensdauer des Glases aus.

Im Folgenden werden Ausführungsbeispiele der Erfindung näher erläutert.

Gemäß der vorliegenden Erfindung wird ein Basisschutzmittel für Bauteile vorgeschlagen.

Das Basisschutzmittel kann durch Mischung folgender Komponenten, insbesondere bei einer Temperatur von 18 °C bis 35 °C, erhalten werden.
8 % bis 12 % Kieselsäureester,
15 % bis 25% Wasser,
8 % bis 43 %, beispielsweise 30 %, Alkohol Ethanol,
0,01 % bis 1,5% ungesättigte Fettsäure, beispielsweise Linolsäure
0,01 % bis 1,5% Kaliumsilikat,
10 % bis 30% Alkylalkoxysilan mit maximal drei OH-Bindungen,
5 % bis 15% Alkylalkoxysilan mit vier bis acht OH-Bindungen,
0 bis 8% Alkohol Butan-2-ol (insbesondere bei Steinen, bei denen das Eindringen schwierig ist, wie z. B. hochkristalline Steine (Marmor usw.), oder bei denen eine längere Verarbeitungszeit nötig ist), und
0 bis 5% Kieselsäuredispersionskolloid.

Ein Kieselsäuredispersionskolloid ist eine flüssige Dispersion oder Suspension von Kieselsäurepartikeln in einem Medium wie Wasser oder einem Lösungsmittel. Kolloidale Systeme bestehen aus kleinen Partikeln, die in einer Flüssigkeit dispergiert sind und aufgrund ihrer Größe und Oberflächeneigenschaften stabil bleiben. Diese Kolloidpartikel sind in der Regel sehr fein verteilt und haben eine hohe spezifische Oberfläche, was zu einer stabilen Dispersion führt. Die Größe der Kieselsäurepartikel in einem Kolloid kann je nach Herstellungsverfahren und Anwendung variieren.

Als kurzkettig sollen Alkylalkoxysilane verstanden werden, die maximal drei OH-Bindungen aufweisen. Als langkettig sollen Alkylalkoxysilane verstanden werden, die vier bis acht OH-Bindungen aufweisen.

Die Herstellung des Basisschutzmittels kann dreistufig erfolgen, beispielsweise durch Hydrolyse und/oder durch Polykondensation. Beispielsweise können drei nacheinander erfolgende Hydrolysen erfolgen. In jedem Vorgang wird die zuvor hergestellte Mischung mit Zusatzstoffen versehen. Die Polykondensation erfolgt dabei automatisch.

Durch Variation der Anteile der langkettigen Alkylalkoxysilane- Oktylgruppen, des Ethanols und des Isobutanols ist es möglich, auf die Restfeuchteanteile innerhalb einer werkseitigen Anwendung einzugehen. Bei der industriellen Fertigung von Betonsteinen im Betonwerk können extrem kurze Anfangstrockenzeiten gefordert sein. Das Abstapeln, also Palettieren der einzelnen Betonsteinlagen, kann bereits fünf Minuten nach dem Einsprühen erfolgen. Innerhalb der verpackten Steine, die beispielsweise mit Folie ummantelt sein können, sollen keine Wasserreaktionen mehr stattfinden, da es sonst zu weißen (mineralischen) Flecken kommt. Diese Wasserreaktionen werden vorrangig durch die Einbindung der langkettigen Alkylalkoxysilane (Oktylgruppen) unterbunden. Mit der Variation der Anteile der Alkohole wird die Eindringtiefe des Basisschutzmittels in den Betonstein, die erforderliche Auftragsmenge und die Haltbarkeit des Basisschutzmittels gesteuert. Das Basisschutzmittel kann mittels eines vollautomatischen Sprühsystems auf den Betonstein aufgebracht werden. Bisher bekannt sind nur wasserbasierte und daraus bedingt weniger wirksame Schutzchemikalien. Da die Betonsteine im Fertigungsprozess eine erhöhte Restfeuchte von über 5% bis 20%, im Kern zum Teil über 15% bis 45%, aufweisen, können bisher nur wasserbasierte Systeme zum Einsatz kommen. Wasser führte bisher in diesem Zusammenhang zur sofortigen Reaktion mit alkoholbasierten Systemen und war somit untauglich.

Zur Sanierung von Rissen in Natur- oder Kunststeinen können folgende Komponenten direkt vor der Verarbeitung gemischt werden:
30 % bis 50 % wasserlösliche Polymetacrylatfarbe mit Polyurethananteil, farblich angepasst an den Bestandsuntergrund des Natur- oder Kunststeins,
5% bis 15% Kieselsol als Dispersionskolloid,
25% bis 35% des oben beschriebenen Basisschutzmittels, und
5% bis 15% Ethanol.

Als Vorbehandlungsstoff kann Kieselsäureester zum Einsatz kommen.

Der Vorbehandlungsstoff wird auf die Flanken des Risses aufgebracht und es werden etwa vier bis acht Stunden Reaktionszeit benötigt. Das Kieselester reagiert dabei mit den Mineralien in den Flanken, um einen haftfähigen bzw. reaktionsfähigen Untergrund zu schaffen.

Danach werden die oben angegebenen Komponenten gemischt, beispielsweise durch Verrühren über etwa fünf Minuten. Dabei wird die Polymetacrylatfarbe soweit zugegeben, dass eine an den Natur- oder Kunststein angepasste Farbe erreicht wird. Diese Mischung wird, insbesondere im leichten Überschuss, in den Riss eingebracht, beispielsweise mittels einer Spritze. Nach etwa 0,5 Stunden bis zwei Stunden kann eine weitere Menge der Mischung eingebracht, beispielsweise nachgespitzt, werden, um abgesenktes Material wieder aufzufüllen. Nach etwa drei bis fünf Stunden hat das aus der Mischung entstehende Produkt eine gummiartige Konsistenz und wird an der Oberfläche abgeschnitten, beispielsweise mittels eines Cuttermessers. Nach weiteren vier bis sechs Stunden ist das Produkt schleiffähig, so dass restliche Überstände mittels Schleifpapier entfernt werden können.

Abschließend kann das zuvor beschriebene Basisschutzmittel zum Schutz des Steins und des Risses aufgebracht werden.

Die Oberfläche wird dabei sehr widerstandsfähig, wobei das Material im Inneren noch etwa drei Jahre dauerelastisch bleibt. Auf diese Weise wird somit ein erneuter Flankenabriss verhindert.

Das oben beschriebene Basisschutzmittel kann auch für Glas verwendet werden. Beispielsweise wurden Solarpaneele mit dem Basisschutzmittel behandelt, beispielsweise aufgesprüht, wobei sich ein Lotus-Effekt zeigte. Dabei kann das Basisschutzmittel unverändert wie oben für den Schutz von Steinen beschrieben, verwendet werden, da das Basisschutzmittel ebenfalls Quarzsandanteile ausbildet. Erstaunlicherweise kann das Basisschutzmittel umweltbedingte Schleifschäden in der Oberfläche des Glases wieder abdecken und somit die Lebensdauer des Solarpaneels verlängern und gegebenenfalls den Ertrag der Solaranlage in der Restlaufzeit wieder erhöhen.

Ferner kann das Basisschutzmittel mit einer Zusatzkomponente, beispielsweise kolloidalem Siliziumdioxid, verwendet werden, um die Widerstandshärte des Glases weiter zu erhöhen und gegebenenfalls auftretende Kristallisationen, beispielsweise durch zu hohe Schichtstärken bei der Verarbeitung, zu verhindern.

Das oben beschriebene Basisschutzmittel ist ein Stoffgemisch, welches sofort nach der Verarbeitung nicht mehr mit Wasser zu weißen Quarzsandausfällungen an der Oberfläche, reagiert. Dies wird erreicht durch die Verbindung von Silikaten und Silanen. Zusätzlich kommen noch Kieselsole für die Widerstandsfähigkeit zum Einsatz. Vorteilhaft als Kieselsäureester kann TEOS (Tetraethylorthosilicat) im Bereich von 10% bis 50% bezogen auf das Basisschutzmittel verwendet werden. Silane können im Bereich 10% bis 50 % bezogen auf das Basisschutzmittel verwendet werden.

Die Ausführungsform für den Glasschutz ist analog zum Steinschutzprodukt. Hier wird nur zusätzlich ein Bindemittel, beispielsweise eine hydrophile pyrogene Kieselsäure mit einer sehr niedrigen spezifischen Oberfläche, zugemischt (beispielsweise mit einem Anteil von 0,5 Gew.-% bis 2,5 Gew.-% bezogen auf das Basisschutzmittel), um die Anbindung an das zu behandelnde Glas zu vereinfachen. Außerdem kann ein zweites Lösemittel, Butan-2-ol, zugemischt werden, um die Sprühfähigkeit des Produktes herstellen zu können.

Insbesondere können als Alkoxysilane die folgenden Stoffe eingesetzt werden:
- Organosilan des Typen (RO)₃Si(CₙH₂ₙ₊₁) mit R = Alkyl und n = 1 - 20
- Organosilane der Typen R'ₓ(RO)_{y} Si(CₙH₂ₙ₊₁) mit R = Alkyl, R' = Alkyl, n = 1 - 20, x+y = 3, x = 1,2, und y = 1,2
- Organosilane des Typen (RO)₃Si(CH₂)ₘ-R' mit R = Alkyl, m = 0,1 - 20, R' = Alkyl, Aryl (z.B. -C₆H₅).

Bevorzugt kann man als Silanisierungsmittel das Silan Si 108[(CH3O)₃-Si-C₈H₁₇] Trimethoxyoctylsilan einsetzen.

Die chemische Reaktion, die den Übergang von Silanen zu Silanolgruppen beschreibt, ist die Hydrolyse. Bei der Hydrolyse reagieren Silane mit Wasser (H₂O), wodurch eine hydrolytische Spaltung der Silizium-Kohlenstoff-Bindungen erfolgt. Das Ergebnis dieser Reaktion sind Silanolgruppen (Si-OH) und Alkohole. Es folgt die allgemeine Formel für die Hydrolyse von Silanen:

R-Si(OR')₃ + 3H₂O → R-Si(OH)₃ + 3ROH

In dieser Formel steht R für eine organische Restgruppe und R' für eine Alkyl- oder Arylgruppe. Die Hydrolyse führt zur Bildung von Silanolgruppen (R-Si(OH)₃) und den entsprechenden Alkoholen (ROH). Die entstehenden Silanolgruppen sind hydrophil und können weitere Reaktionen eingehen, wie beispielsweise Kondensationsreaktionen zur Bildung von Siloxanbindungen und Silikatstrukturen.

Es folgt die chemische Reaktionsgleichung der Kondensation zur Siloxanbindung bzw. der Silikatstrukturen:

R-O-Si-OH- + R'-O-Si-OH -> R-O-Si-O-Si-R' + H₂O

Die Kondensation von Silanolgruppen führt zur Bildung von Siloxanbindungen und Silikatstrukturen. Die Reaktion ist eine Kondensationsreaktion, bei der Wasser (H₂O) abgespalten wird. Es folgt die allgemeine Formel für die Kondensation von Silanolgruppen:

n R-Si(OH)₃ → [-Si-O-Si-]n + n H₂O

In dieser Reaktion bildet sich eine Siloxanbindung [-Si-O-Si-]n, wobei n die Anzahl der sich wiederholenden Einheiten darstellt. Bei ausreichender Konzentration von Silanolgruppen können sich diese miteinander vernetzen und größere Siloxanketten bilden, die dann in Silikatstrukturen übergehen können.

Die Bildung von Siloxanbindungen und Silikatstrukturen erhöht die mechanische Stabilität und die Beständigkeit gegenüber Wasser und anderen Umwelteinflüssen, was für den Oberflächenschutz von Materialien wie Beton oder Natursteinen von Bedeutung sein kann.

Während der Hydrolyse werden die Silane (Alkylalkoxysilane) unter Zugabe von Wasser in mindestens ein Silanol umgewandelt.

In dieser Reaktion ersetzt Wasser die Alkoxy-Gruppe am Silanmolekül durch Hydroxygruppen (OH), wodurch Silanolgruppen entstehen.

In den entstandenen Silanolen sind die organischen R-Gruppen (Reste) ebenfalls als kurze oder lange Ketten vorhanden.

Beispiel für ein kurzkettiges Silan: Methyltriethoxysilan; dabei ist Reine Methylgruppe, die zu Methylsilanol (CH₃-Si(OH)₃) wird.

Beispiel für ein langkettiges Silan: Oktylsilan; dabei ist Reine Oktylgruppe, welche zu Oktylsilanol wird (C₈H₁₇-Si(OH)₃).

Abhängig von der R-Gruppe der Silane entstehen also lange oder kurze Silanole.

Kurzkettige Silane (z. B. Methyltrieethoxysilan) haben kleine organische Methylgruppen, wodurch die Reaktionsgeschwindigkeit erhöht und im Anschluss die Kondensation zu Siloxanen erleichtert wird. Diese benötigen weniger Platz und können das Gitter dichter bilden (kompaktes stabiles Siloxannetzwerk) und haften besser an den Oberflächen.

Langkettige Silane (z. B. Oktyltriethoxysilan) bieten deutlich erhöhte wasserabweisende Eigenschaften an der Oberfläche (Oleophobie), haben durch ihre Länge eine höhere Flexibilität und verringern dadurch Spannungen und Risse.

Durch die Kombination von kurzen und langen Silanen können dickere und robustere Schutzschichten ohne Verlust der Flexibilität erreicht werden.

TEOS (Tetraethylorthosilikat) kann als Hauptlieferant für das Siliziumatom (Si) eingesetzt werden.

Wenn die Silanole auf die zu behandelnde Oberfläche aufgebracht werden und das Ethanol verdunstet, beginnt die Kondensation, wobei zwei Silanolgruppen miteinander unter Abspaltung von Wasser zu einer Siloxanbindung reagieren. Diese Reaktion führt zum sogenannten Siloxangitter oder Siloxannetzwerk. Dabei kommt es zu regelmäßiger oder amorpher Gitterbildung.

Bei der vorliegend beschriebenen Silanolkombination ist es möglich, dass auch bei höheren Restfeuchten im zu behandelnden Bauteil die Siloxanreaktion zum gewünschten Ergebnis, das heißt zur regelmäßigen Gitterbildung, führt.

Wenn Silane zunächst hydrolysiert werden, entstehen Silanole (R-Si(OH)₃), die reaktiver sind und schneller mit Oberflächen reagieren. Diese Methode führt zu einer schnelleren und oft vollständigeren Oberflächenbehandlung, da die Silanole in der Lage sind, unmittelbar nach dem Auftragen Siloxanbindungen zu bilden.

## Patentansprüche

1. Verfahren zur Herstellung eines Basisschutzmittels, wobei eine Mischung folgender Komponenten hergestellt wird:
- mindestens ein Silikat,
- mindestens ein Alkylalkoxysilan, das maximal drei OH-Bindungen aufweist,
- mindestens ein Alkylalkoxysilan, das vier bis acht OH-Bindungen aufweist,
- mindestens einen Alkohol, insbesondere Ethanol und/oder Isobutanol als Konservierungsstoff,
wobei die Komponenten bei einer Umgebungs-Temperatur von 15° C bis 35 °C miteinander vermischt werden, wobei die Herstellung dreistufig oder vierstufig einschließlich Hydrolyse erfolgt, bei der Alkylalkoxysilane mit Wasser zu Silanolgruppen und Alkoholen reagieren.

2. Verfahren nach Anspruch 1,
wobei die Mischung folgende Komponenten umfasst:
- 8 % bis 12 % Kieselsäureester
- 15 % bis 25% Wasser,
- 20% bis 35 % Ethanol,
- 0,01 % bis 1,5% ungesättigte Fettsäure, oder Phosphorsäure oder Tetramethylammoniumhydroxid
- 0,01 % bis 1,5% Kaliumsilikat als Silikat,
- 10 % bis 30% Alkylalkoxysilan, das maximal drei OH-Bindungen aufweist
- 5 % bis 15% Alkylalkoxysilan, das vier bis acht OH-Bindungen aufweist,-
- 0 bis 8% Isobutanol, und
- 0 bis 5% Kieselsäuredispersionskolloid.

3. Verfahren nach Anspruch 2, wobei als Kieselsäureester Tetraethylorthosilicat verwendet wird.

4. Basisschutzmittel, hergestellt durch das Verfahren nach einem der vorhergehenden Ansprüche.

5. Schutzmittel, umfassend das Basisschutzmittel nach Anspruch 4, dem ein Bindemittel, insbesondere eine hydrophile pyrogene Kieselsäure oder eine kolloidale Kieselsäure beigemischt ist.

6. Schutzmittel, umfassend eine Mischung von 25% bis 35% des Basisschutzmittels nach Anspruch 4 mit folgenden Komponenten:
- 30 % bis 50 % wasserlösliche Polymetacrylatfarbe mit Polyurethananteil,
- 5% bis 15% Kieselsol als Dispersionskolloid,
- 5% bis 15% Alkohol.

7. Verwendung des Basisschutzmittels nach Anspruch 4 zur Behandlung von Kunststein oder Naturstein.

8. Verwendung nach Anspruch 7, wobei das Basisschutzmittel zur Sanierung eines Risses in Kunststein oder Naturstein verwendet wird, wobei 25% bis 35% des Basisschutzmittels vor der Verarbeitung mit folgenden Komponenten gemischt werden:
- 30 % bis 50 % wasserlösliche Polymethacrylatfarbe mit Polyurethananteil, farblich angepasst an den Bestandsuntergrund des Natur- oder Kunststeins,
- 5% bis 15% Kieselsol als Dispersionskolloid,
- 5% bis 15% Alkohol,
wobei die Mischung mindestens einmal oder zweimal in den Riss eingebracht wird.

9. Verwendung nach Anspruch 7 oder 8,
wobei vor dem Einbringen der Mischung Kieselsäureester als Vorbehandlungsstoff auf die Flanken des Risses aufgebracht wird und eine Reaktionszeit von vier bis acht Stunden ermöglicht wird.

10. Verwendung des Basisschutzmittels nach Anspruch 4 zur Behandlung eines Bauteils aus Glas, insbesondere eines Solarmoduls.

11. Verwendung nach Anspruch 10, wobei dem Basisschutzmittel kolloidales Siliziumdioxid beigemischt ist oder wird.
